# EUROPEAN PATENT APPLICATION

(11) **EP 4 818 758 A1**
(43) Date of publication of application: **07.10.2026**
(21) Application number: 26150868.3
(22) Date of filing: 08.01.2026
(51) Int. Cl.: G01S 19/24, G01S 19/30, G01S 19/05

(54) **JOINT SUBFRAME AND BIT SYNCHRONIZATION OF GNSS SATELLITE SIGNALS**

(30) Priority: 02.04.2025 US 202519098878
(71) Applicant: MediaTek Inc., Hsinchu City 30078 (TW)
(72) Inventor: CHEN, Kun-Tso, Hsinchu City (TW)
(74) Representative: Hoefer & Partner Patentanwälte mbB

(57) **Abstract**

Techniques pertaining to joint subframe and bit synchronization of data signals in satellite and mobile communications are described. An apparatus, e.g. a user equipment, receives a signal, e.g. a GNSS signal, (910) and detects the transmitted data symbols in the signal (920). The apparatus then computes a subframe hypothesis test correlation including the sync word correlation and the bit correlations (930). The apparatus also synchronizes the data subframe and bit timing (940).

## Description

### TECHNICAL FIELD

The present disclosure is generally related to mobile communications and, more particularly, to joint subframe and bit synchronization of data from Global Navigation Satellite System (GNSS) satellites, including GPS, GLONASS, Galileo, BeiDou, QZSS, NavIC, SBAS and so on.

### BACKGROUND

In wireless communications such as satellite communications, the receiver must synchronize to the satellite's transmitted signal before decoding and using the data. A GNSS receiver must receive the satellites' broadcast navigation data to compute satellites' positions. In the present disclosure, the term GLONASS (GLObalnaya NAvigatsionnaya Sputnikovaya Sistema in Russian) is used as an example in our embodiment. However, the same method and apparatus can be applied to the other satellite or communication systems, where the bit and subframe synchronizations are required to receive the transmitted data. The broadcast satellite navigation message consists of periodic frames (e.g., 15 subframes per 30 seconds in GLONASS). Each subframe (e.g., 200 symbols per 2 seconds in GLONASS) includes a fixed sequence of symbols, Sync Word (e.g., 30 symbols in GLONASS), and a sequence of data bits (85 bits in GLONASS). In GLONASS, the data bit sequence is encoded by Differential Phase Shift Keying (DPSK), and one data bit is encoded by a two symbol sequence {0, 1}, called meander sequence. The basic data element is a symbol, which is modulated to a RF carrier using binary phase shift keying (BPSK).

After acquiring and tracking a satellite signal, e.g., using frequency-locked loop (FLL) or phase-locked loop (PLL), a receiver must synchronize the symbol boundary by using the sign changes among symbols. The receiver also must synchronize the bit and subframe and boundaries to get data bits and decode. Performing such tasks may impede or otherwise negatively impact overall system performance of the receiver as the tasks require computational resources, processing time and power consumption on the part of the receiver, e.g., a smart phone that uses GNSS to get its position. Therefore, there is a need for a solution to speed up the subframe and bit synchronization of signals in satellite or mobile communications.

### SUMMARY

The following summary is illustrative only and is not intended to be limiting in any way. That is, the following summary is provided to introduce concepts, highlights, benefits, and advantages of the novel and non-obvious techniques described herein. Selected implementations are further described below in the detailed description. Thus, the following summary is not intended to identify essential features of the claimed subject matter, nor is it intended for use in determining the scope of the claimed subject matter.

An objective of the present disclosure is to propose solutions or schemes that address the issue(s) described herein. More specifically, various schemes proposed in the present disclosure are believed to provide solutions pertaining to joint subframe and bit synchronization of signals in GNSS or mobile communications. It is believed that implementations of one or more of the schemes proposed herein may address or otherwise alleviate the issues described above. For instance, implementations of the proposed schemes may improve the subframe detection probability for fast Time-To-First-Fix (TTFF) of a GNSS receiver. The improved bit synchronization under the proposed schemes may improve a Decision-Feedback FLL/PLL sensitivity and reduce the number of subframe synchronization hypotheses to search. We also propose a simplified joint subframe and bit synchronization architecture to reduce the calculation complexity per hypothesis. Moreover, aiding data bits are utilized in the joint synchronization to improve performance and reduce calculation complexity. A method according to the invention is defined in independent claim 1. The dependent claims define preferred embodiments thereof.

In one aspect, a method may involve a receiver receiving a satellite signal and detecting the data symbols of the satellite signal. The method may also involve the receiver computing a subframe correlation including Sync Word Correlation and Bit Correlation. The method may further involve the receiver synchronizing the data subframe and bit timing.

In another aspect, an apparatus may include a receiver communication device configured to receive signals wirelessly and a processor coupled to the receiver. The processor may receive a satellite signal and detect data symbols in the satellite signal. The processor may also compute a Subframe Correlation including Sync Word Correlation and Bit Correlation. The processor may further synchronize the data subframe and bit timing. In particular, the apparatus, preferably the processor thereof, is adapted to perform the method steps as defined in the claims.

It is noteworthy that, although the description provided herein may be in the context of GLONASS satellite signal receiving, the proposed concepts, schemes and any variation(s)/derivative(s) thereof may be implemented in, for and by other types of communication technologies, for example and without limitation, GPS, Galileo, BeiDou, QZSS, NavlC, or SBAS signal synchronization. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram of an example scenario with which various solutions and schemes in accordance with the present disclosure may be implemented.
FIG. 2 is a block diagram of an example design under a proposed scheme in accordance with the present disclosure.
FIG. 3 is a diagram of an example scenario under a proposed scheme in accordance with the present disclosure.
FIG. 4 is a block diagram of an example design under a proposed scheme in accordance with the present disclosure.
FIG. 5 is a diagram of an example scenario under a proposed scheme in accordance with the present disclosure.
FIG. 6 is a block diagram of an example design under a proposed scheme in accordance with the present disclosure.
FIG. 7 is a block diagram of an example design under a proposed scheme in accordance with the present disclosure.
FIG. 8 is a block diagram of an example apparatus under a proposed scheme in accordance with the present disclosure.
FIG. 9 is a flowchart of a second example process under a proposed scheme in accordance with the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to joint subframe and bit synchronization of GNSS signals in mobile communications. According to the present disclosure, a number of possible solutions may be implemented separately or jointly. That is, although these possible solutions may be described below separately, two or more of these possible solutions may be implemented in one combination or another.

It is noteworthy that the term GLONASS is used as example in the following description. In general, a periodic frame of a GLONASS navigation message includes fifteen subframes (30 seconds in total). Subframes 1 ~ 4 (ephemeris) include satellite immediate data and time tag. Subframe 5 includes Universal Time Coordinated (UTC) correction. Subframes 6 ~ 15 (almanac) include non-immediate data for all satellites. The mean TTFF is 22.36 seconds, with a range of 8 ~ 38 seconds. One missed subframe may cost more TTFF. For example, one missed subframe 1 requires 30 seconds for decoding subframe 1 again.

The processing of a GLONASS navigation message typically involves meander sequence symbol synchronization (10 milliseconds per symbol) and subframe synchronization (200 symbols in 2 seconds per subframe) by searching the Sync Word (30 symbols per subframe). After subframe synchronization, the bit boundary is also synchronized and then the meander sequence can be removed to obtain one data bit from two symbols. DPSK demodulation is also performed to the data bits. Then, navigation message decoding is performed.

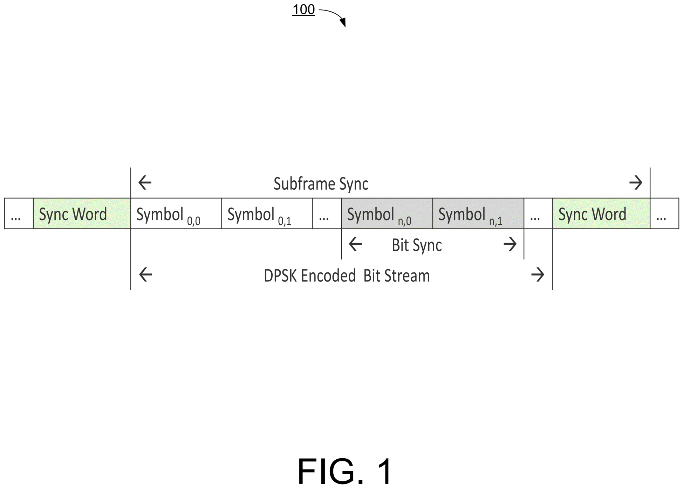

FIG. 1 illustrates an example scenario 100 of subframe/bit synchronization. Referring to FIG. 1, a general signal structure that is processed typically includes periodically embedded Sync Word(s) and data bits (optionally meander sequence modulated and DPSK encoded). The periodically embedded Sync Word(s) (fixed sequence of symbols) may be for subframe synchronization. In the meander sequence modulated data bits, one bit consists of multiple symbols. As described below, subframe and bit boundary detection as well as decoding of data bits may be performed under various proposed schemes in accordance with the present disclosure.

Under a proposed scheme in accordance with the present disclosure, after acquisition of a GLONASS signal, a receiver may detect symbols in the GLONASS signal every 10 milliseconds. To search the position of Sync Word in a GLONASS data subframe, the receiver may compute a Joint Correlation (for each hypothesis of Sync Word position) that includes Sync Word Correlation and Bit Correlation. The Joint Correlation can be used to test a subframe hypothesis. If the subframe hypothesis is qualified, the receiver may synchronize the subframe and bit timing at the same time based on the defined timing in this hypothesis. Because the subframe hypothesis is related to the bit hypothesis based on the signal forma definition, the Joint Correlation can also be used to test a bit hypothesis. It the bit hypothesis is qualified, the receiver can determine the bit boundary and reduce the number of possible subframe hypotheses.

Under a proposed scheme in accordance with the present disclosure, both Sync Word Correlation and Bit Correlation may be matched to pre-defined sequence of symbols or data format in the signal specification. For example, Time Mark sequence in GLONASS is designed for subframe synchronization. The Bit Correlation may be computed using the GLONASS specification that one bit consists of two symbols encoded by a known meander sequence. If a data bit is known from the specification or aiding source, the corresponding two symbols can be used in Bit Correlation. Moreover, the known bits can also be used as additional Sync Word symbols for Sync Word Correlation.

Under a proposed scheme in accordance with the present disclosure, when there are residual carrier frequency and phase error, in-phase and/or quadrature components of the symbols may be used to compute the correlation. Moreover, a simplified correlation architecture is proposed to reduce Sync Word Correlation complexity by using common Bit Correlations in all subframe hypotheses.

Under a proposed scheme in accordance with the present disclosure, the joint subframe/bit synchronization sensitivity may be much better than legacy subframe synchronization method. The gain at detection rate 0.9 may be 2.1dB in PLL state and 1.5 dB in FLL state. Moreover, the bit sync detection may be almost 100% as symbol signal-to-noise ratio (SNR) is greater than - 4.5dB. The bit synchronization detection may reduce one half of subframe hypotheses, thereby improving subframe detection rate and computation complexity of subsequent subframe correlations.

Under a proposed scheme in accordance with the present disclosure, after acquisition of a pseudorandom number (PRN) code and Doppler, a carrier tracking loop output symbol estimation may be performed as follows: ${\vec{r}}_{i} = {I}_{i} + j ⋅ {Q}_{i} = \left|{\vec{r}}_{i}\right| ⋅ {e}^{j \left({θ}_{i}+{φ}_{i}\right)}$

In the above expression, *θᵢ* denotes the residual carrier frequency and phase error, and *φᵢ* denotes the phase transition due to data bit and meander sequence encoding, *φᵢ* = 0 or π. The subframe/bit synchronization may be considered for each condition.

When FLL or PLL is not locked, variable phase changes may be considered, and the carrier tracking loop output symbol estimation may be expressed as follows: ${\vec{r}}_{i} = \left(\left|{\vec{r}}_{i}\right|⋅{e}^{{jθ}_{i}}\right) ⋅ {e}^{{jφ}_{i}} = \left|{\vec{r}}_{i}\right| ⋅ {e}^{{jθ}_{i}} or - \left|{\vec{r}}_{i}\right| ⋅ {e}^{{jθ}_{i}}$

When the frequency is locked, the residual phase may be a constant *θ*₀, and the carrier tracking loop output symbol estimation may be expressed as follows: ${\vec{r}}_{i} = \left|{\vec{r}}_{i}\right| ⋅ {e}^{{jθ}_{0}} or - \left|{\vec{r}}_{i}\right| ⋅ {e}^{{jθ}_{0}}$

When the phase is locked, *θᵢ* = 0, and the carrier tracking loop output symbol estimation may be expressed as follows: ${\vec{r}}_{i} = \left|{\vec{r}}_{i}\right| or - \left|{\vec{r}}_{i}\right|$

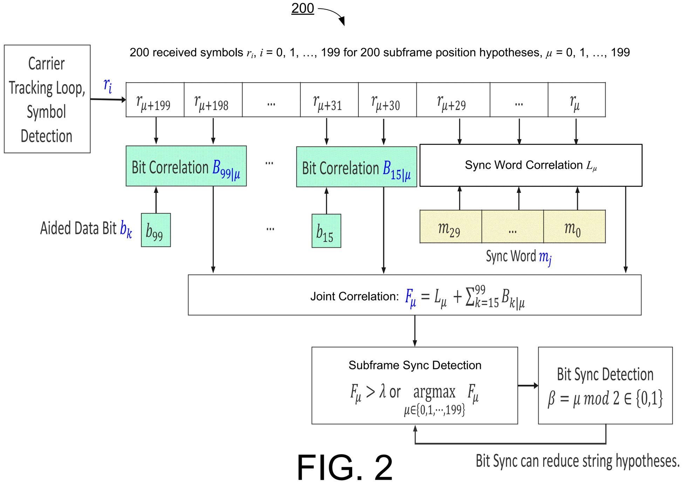

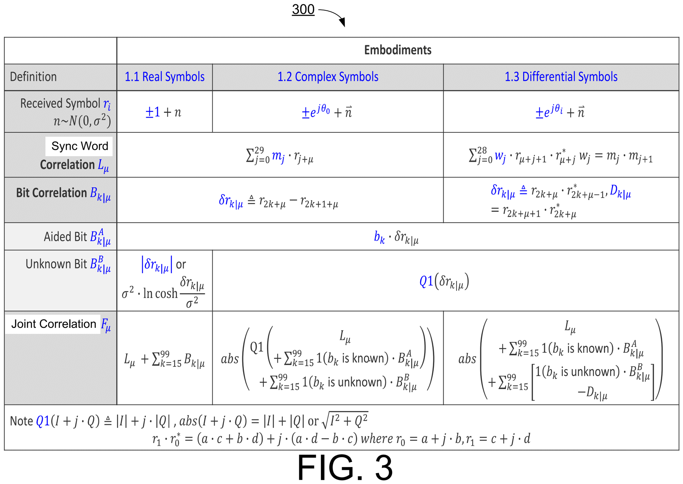

FIG. 2 illustrates an example design 200 of a joint subframe/bit synchronization correlator in a first embodiment under a proposed scheme in accordance with the present disclosure. FIG. 3 illustrates an example 300 in the first embodiment to calculate Joint Correlation. Referring to FIG. 2 and FIG. 3, under the proposed scheme, a carrier tracking loop may output hard and soft detected symbols from symbol estimation/detection. A soft decision by the carrier tracking loop may involve multiplication in the correlation. A hard decision by the carrier tracking loop may involve an XOR operation (bit operator) or multiplication in the correlation, e.g., "1 x -1" corresponds to "0 xor 1".

Under the proposed scheme, different implementations may be applied for different symbol buffer sizes. For instance, after collecting 200 received symbols, correlations of all 200 hypotheses may be computed in one shot. Or one subframe hypothesis correlation may be computed with a sliding window of 200 received symbols. After sliding 200 symbols, all the 200 hypothesis correlations may be updated. Under the proposed scheme, aiding data bits may be used to improve bit or/and subframe correlation performance. The known sequence to correlate consists of the fixed Sync Word, the known bits based on the signal definition, and the aiding data bits. The number of hypotheses may be reduced if the bit synchronization is already detected.

Bit Correlation values, *B*_{*k*|}*_{µ},k* = 0,1,...,199, may be shared among different subframe hypotheses to reduce the computation complexity. That is, all the calculated Bit Correlations in FIG. 3 can be shared among all Joint Correlations. Therefore, the same Bit Correlation used in several Joint Correlations can be reused and avoid the recalculation.

In the first embodiment for Joint Correlation, an estimated data symbol from tracking loop and data detection may be used: *r̅ᵢ = Iᵢ* + *j · Qᵢ.* In a first approach (Embodiment 1.1), *Iᵢ* may be used (e.g., when PLL is locked). In a second approach (Embodiment 1.2), *Iᵢ* + *j · Qᵢ* may be used (e.g., when FLL is locked). In a third approach (Embodiment 1.3), *Iᵢ +j · Qᵢ* may be used (e.g., when acquisition is with frequency error) with differential detection to detect the symbol transition, as follows: ${r}_{1} ⋅ {r}_{0}^{∗} = \left(a⋅c+b⋅d\right) + j ⋅ \left(a⋅d-b⋅c\right)$ In the above expression, *r*₀ *= a + j* · *b,r*₁ *= c + j* · *d* and ${r}_{1} ⋅ {r}_{0}^{∗} = \left(a⋅c+b⋅d\right)$ if phase is locked. The fixed Sync Word and known data bits can be processed to generate the corresponding differential detection symbol sequence for correlation.

Regarding Bit Correlation based on GLONASS meander encoding, two symbols in a bit may be: (1, -1) or (-1, 1), and *δrk*|*µ* =± 2, ± 2*e*^{*jθ*₀}, or ± *e^{jθ}* (if differential detection is used). We define two operators to capture correlation energy from I and Q channels. The first, *Q*1(*I + j* · *Q*), transforms a correlation vector with unknown phase to Quadrant 1. The second, *abs*(*I + j* · *Q*), computes the amplitude of a correlation vector. Multiple (e.g., *N*) subframes' correlation may be accumulated as ${F}_{μ}^{s}$ to enhance detection rate as: ${F}_{μ} = {\sum }_{s = 1}^{N} {F}_{μ}^{s}$ .

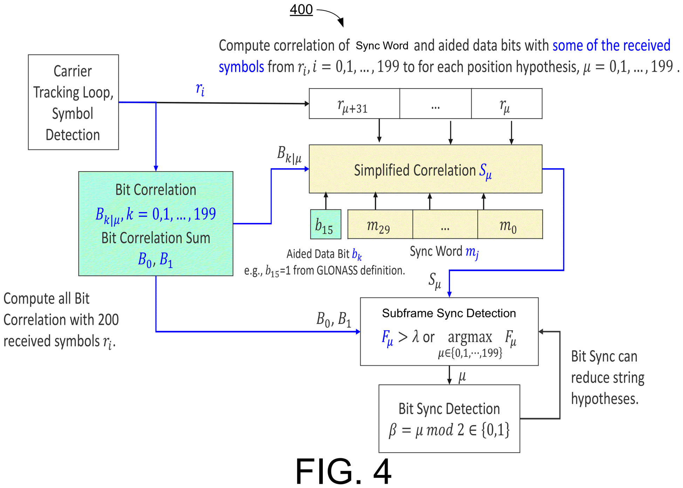

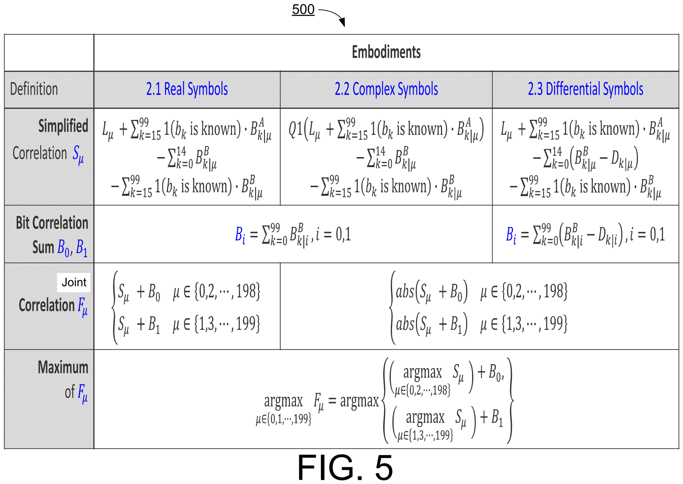

FIG. 4 illustrates an example design 400 to compute Joint Correlation using a simplified architecture under a proposed scheme in accordance with the present disclosure. FIG. 5 illustrates an example 500 to compute Joint Correlation in the second embodiment. Referring to FIG. 4 and FIG. 5, under the proposed scheme, Bit Correlation values, *B*_{*k*|}*_{µ},k* = 0,1,...,199, may be shared among different subframe hypotheses to reduce the computation complexity. Moreover, Bit Correlation Sum, *B*₀ and *B*₁, can be used to reduce the number of Bit Correlations required in a given subframe hypothesis as shown in Fig. 5, where a Joint Correlation is sum of Simplified Correlation and one Bit Correlation Sum. The Simplified Correlation consists of Sync Word Correlation and several Bit Correlations. The computation complexity of a hypothesis Joint Correlation is reduced a lot due to the shared Bit Correlations.

Regarding Joint Correlation with received symbol phase ambiguity in the carrier tracking loop, an absolute value of the correlation values may be used in detection. For illustrative purposes, the following may be used: (a) random data bits, ${F}_{μ} = \left|{\sum }_{j = 0}^{29} {m}_{j} ⋅ {r}_{j + μ}\right| + {\sum }_{k = 15}^{99} \left|{δr}_{k \left|μ\right.}\right|$; and (b) known bits (e.g., *b*₁₅) and the other being random, ${F}_{μ} = \left|{\sum }_{j = 0}^{29} {m}_{j} ⋅ {r}_{j + μ} + {b}_{15} ⋅ {δr}_{15 \left|μ\right.}\right| + {\sum }_{k = 16}^{99} \left|{δr}_{k \left|μ\right.}\right|$ . Under the proposed scheme, with simplified Joint Correlation, the above two examples may become: (a) ${S}_{μ} = \left|{\sum }_{j = 0}^{29} {m}_{j} ⋅ {r}_{j + μ}\right| - {\sum }_{k = 0}^{14} \left|{δr}_{k \left|μ\right.}\right|$ (e.g., with random bits); and (b) ${S}_{μ} = \left|{\sum }_{j = 0}^{29} {m}_{j} ⋅ {r}_{j + μ} + {b}_{15} ⋅ {δr}_{15 \left|μ\right.}\right| - {\sum }_{k = 0}^{15} \left|{δr}_{k \left|μ\right.}\right|$ (with known bits (*b*₁₅) and the other being random).

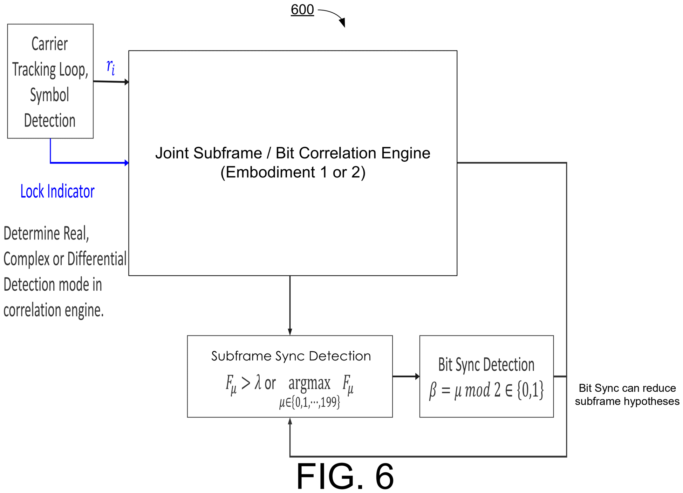

FIG. 6 illustrates an example design 600 of a Joint Correlator in a third embodiment under a proposed scheme in accordance with the present disclosure. Referring to FIG. 6, a Joint Correlation Engine may take the detected symbol *rᵢ* and lock indicator from the carrier tracking loop and symbol detection function block as input. Then the Joint Correlation Engine may use the lock indicator to select real, complex or differential detection mode to perform subframe synchronization detection and/or bit synchronization detection.

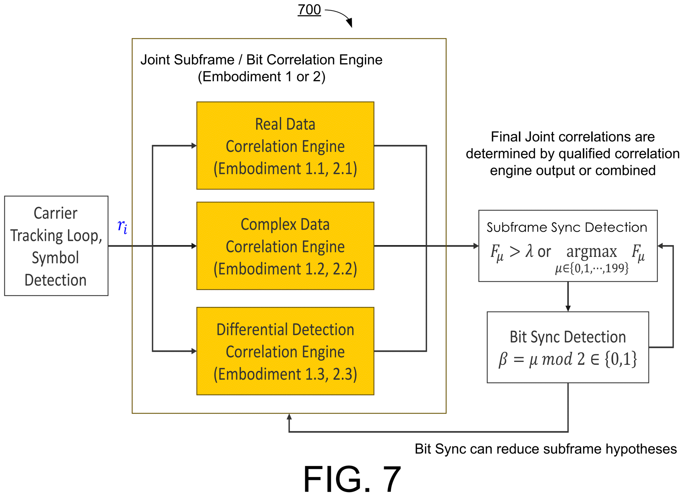

FIG. 7 illustrates an example design 700 of a Joint Correlation Engine in the fourth embodiment under a proposed scheme in accordance with the present disclosure. Design 700 is similar to Design 600. However, Design 700 will perform all the real, complex or differential detection modes and process all the correlation results to detect subframe and/or bit synchronization. Referring to FIG. 7, the Joint Correlation Engine may include a real data correlation engine, a complex data correlation engine, and a differential detection correlation engine. The real data correlation engine may utilize or produce the variables/parameters under Embodiment 1,1 and Embodiment 2.1 shown in FIG. 3 and FIG. 5, respectively. The complex data correlation engine may utilize or produce the variables/parameters under Embodiment 1,2 and Embodiment 2.2 shown in FIG. 3 and FIG. 5, respectively. The differential detection correlation engine may utilize or produce the variables/parameters under Embodiment 1,3 and Embodiment 2.3 shown in FIG. 3 and FIG. 5, respectively.

### Illustrative Implementations

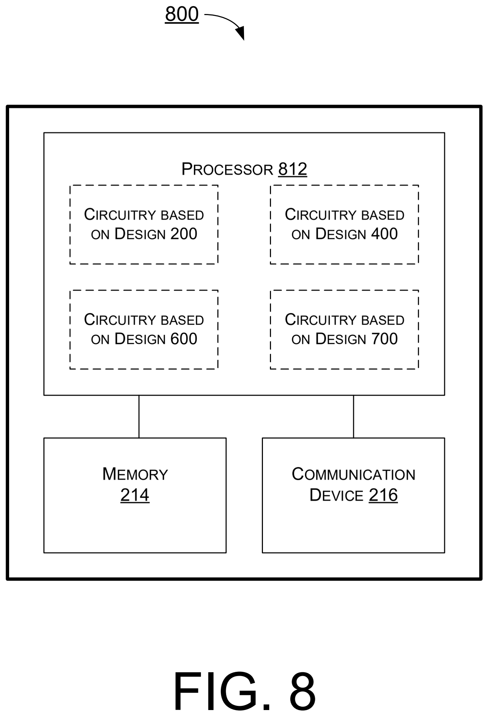

FIG. 8 illustrates an example apparatus 800 in accordance with an implementation of the present disclosure. Apparatus 800 may perform various functions to implement schemes, techniques, processes, and methods described herein pertaining to joint subframe and bit synchronization of signals in satellite or mobile communications, including the various schemes described above with respect to various proposed designs, concepts, schemes, systems and methods described above as well as processes described below.

Apparatus 800 may be a part of an electronic apparatus, which may be a network apparatus or a UE, such as a portable or mobile apparatus, a wearable apparatus, a vehicular device or a vehicle, a wireless communication apparatus or a computing apparatus. For instance, apparatus 800 may be implemented in a smartphone, a smart watch, a personal digital assistant, an electronic control unit (ECU) in a vehicle, a digital camera, or a computing equipment such as a tablet computer, a laptop computer or a notebook computer. In some implementations, apparatus 800 may also be a part of a machine type apparatus, which may be an loT apparatus such as an immobile or a stationary apparatus, a home apparatus, a roadside unit (RSU), a wire communication apparatus or a computing apparatus. For instance, apparatus 800 may be implemented in a smart thermostat, a smart fridge, a smart door lock, a wireless speaker or a home control center. When implemented in or as a network apparatus, apparatus 800 may be implemented in an eNodeB in an LTE, LTE-Advanced or LTE-Advanced Pro network or in a gNB or TRP in a 5G, B5G or 6G network, an NR network, or an loT network.

In some implementations, apparatus 800 may be implemented in the form of one or more integrated-circuit (IC) chips such as, for example and without limitation, one or more single-core processors, one or more multi-core processors, one or more complex-instruction-set-computing (CISC) processors, or one or more reduced-instruction-set-computing (RISC) processors. In the various schemes described above, apparatus 800 may be implemented in or as a network apparatus or a UE. Apparatus 800 may include at least some of those components shown in FIG. 8 such as a processor 812, for example. Apparatus 800 may further include one or more other components not pertinent to the proposed scheme of the present disclosure (e.g., internal power supply, display device and/or user interface device), and, thus, such component(s) of apparatus 800 are neither shown in FIG. 8 nor described below in the interest of simplicity and brevity.

In one aspect, apparatus 800 may be implemented in the form of one or more single-core processors, one or more multi-core processors, or one or more CISC or RISC processors. That is, even though a singular term "a processor" is used herein to refer to processor 812, processor 812 may include multiple processors in some implementations and a single processor in other implementations in accordance with the present disclosure. In another aspect, processor 812 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, processor 812 is a special-purpose machine specifically designed, arranged, and configured to perform specific tasks including those pertaining to joint subframe and bit synchronization of signals in satellite or mobile communications in accordance with various implementations of the present disclosure. For instance, processor 812 may be configured with circuitry based on design 200, design 400, design 600 and/or design 700 described above with respect to FIG. 2 ~ FIG. 7.

In some implementations, apparatus 800 may also include a communication device 816 coupled to processor 812. Communication device 816 may be capable of wirelessly transmitting and receiving data. In some implementations, communication device 816 may be capable of wirelessly communicating with different types of wireless networks of different radio access technologies (RATs). In some implementations, communication device 816 may be equipped with a plurality of antenna ports (not shown) such as, for example, four antenna ports. That is, communication device 816 may be equipped with multiple transmit antennas and multiple receive antennas for multiple-input multiple-output (MIMO) wireless communications. In some implementations, communication device 816 may include a receiver.

In some implementations, apparatus 800 may further include a memory 814 coupled to processor 812 and capable of being accessed by processor 812 and storing data therein. Memory 814 may include a type of random-access memory (RAM) such as dynamic RAM (DRAM), static RAM (SRAM), thyristor RAM (T-RAM) and/or zero-capacitor RAM (Z-RAM). Alternatively, or additionally, memory 814 may include a type of read-only memory (ROM) such as mask ROM, programmable ROM (PROM), erasable programmable ROM (EPROM) and/or electrically erasable programmable ROM (EEPROM). Alternatively, or additionally, memory 814 may include a type of non-volatile random-access memory (NVRAM) such as flash memory, solid-state memory, ferroelectric RAM (FeRAM), magnetoresistive RAM (MRAM) and/or phase-change memory.

In some implementations, apparatus 800 may be a communication entity capable of communicating with each other using various proposed schemes in accordance with the present disclosure. For illustrative purposes and without limitation, a description of capabilities of apparatus 800, as a UE, is provided below in the context of example process 900.

### Illustrative Processes

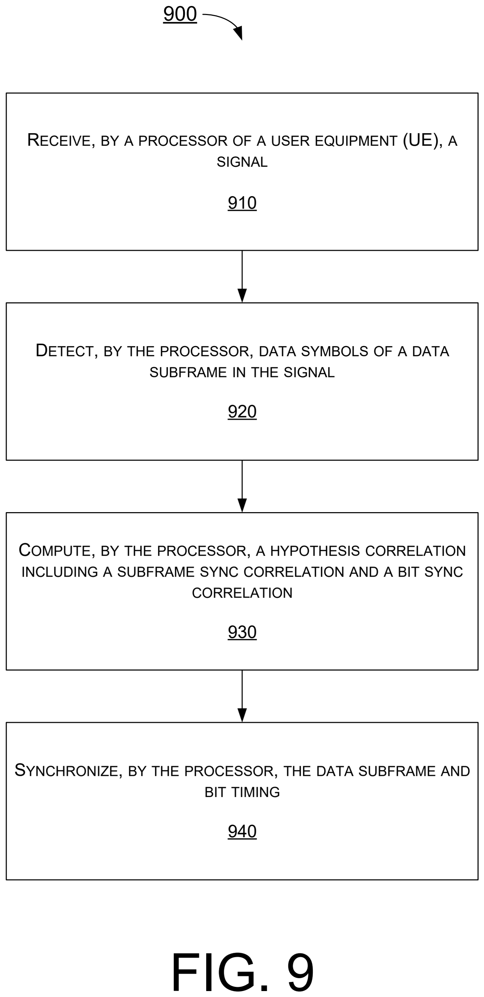

FIG. 9 illustrates an example process 900 in accordance with an implementation of the present disclosure. Process 900 may represent an aspect of implementing various proposed designs, concepts, schemes, systems and methods described above. More specifically, process 900 may represent an aspect of the proposed concepts and schemes pertaining to joint subframe and bit synchronization of signals in satellite or mobile communications in accordance with the present disclosure. Process 900 may include one or more operations, actions, or functions as illustrated by one or more of blocks 910, 920, 930 and 940. Although illustrated as discrete blocks, various blocks of process 900 may be divided into additional blocks, combined into fewer blocks, or eliminated, depending on the desired implementation. Moreover, the blocks/sub-blocks of process 900 may be executed in the order shown in FIG. 9 or, alternatively, in a different order. Furthermore, one or more of the blocks/sub-blocks of process 900 may be executed repeatedly or iteratively. Process 900 may be implemented by or in apparatus 800 as well as any variations thereof. Solely for illustrative purposes and without limiting the scope, process 900 is described below in the context of apparatus 800 as a smart phone. Process 900 may begin at block 910.

At 910, process 900 may involve processor 812 of apparatus 800 receiving, via communication device 816, a signal (e.g., a satellite signal from apparatus 920). Process 900 may proceed from 910 to 920.

At 920, process 900 may involve processor 812 detecting, using a carrier tracking loop and symbol detection function block of design 200, 400, 600 or 700, data symbols of a data subframe in the signal. Process 900 may proceed from 920 to 930.

At 930, process 900 may involve processor 812 computing, using a joint subframe and bit correlation engine of design 200, 400, 600 or 700, a hypothesis correlation including a subframe sync correlation and a bit sync correlation. Process 900 may proceed from 930 to 940.

At 940, process 900 may involve processor 812 synchronizing, using a subframe synchronization detection and bit synchronization detection function block of design 200, 400, 600 or 700, the data subframe and bit timing (e.g., simultaneously).

In some implementations, the subframe sync correlation may involve a correlation of a sync word matched to a predefined sequence of symbols in a GNSS signal specification. In some implementations, the predefined sequence of symbols may include a Time Mark sequence in a GLONASS signal specification.

In some implementations, the bit sync correlation may involve a correlation of a bit matched to a predefined sequence of symbols in a GNSS signal specification. In some implementations, the predefined sequence of symbols may include a meander sequence in a GLONASS signal specification.

In some implementations, responsive to a data bit being known, in computing the bit sync correlation, process 900 may further involve processor 812 computing a correlation matched to the data bit. Alternatively, or additionally, responsive to a data bit being known, in computing the subframe sync correlation, process 900 may further involve processor 812 computing a correlation matched to the data bit.

In some implementations, responsive to a data bit being unknown, in computing the bit sync correlation, process 900 may further involve processor 812 computing the bit correlation using an estimated data bit.

In some implementations, responsive to an occurrence of either or both of a residual carrier frequency and phase error, in computing the hypothesis correlation, process 900 may involve processor 812 computing a symbol correlation using an in-phase component, a quadrature component, or both, of the data symbols.

In some implementations, in computing the hypothesis correlation, process 900 may involve processor 812 performing a symbol correlation using a soft decision or a hard decision of the data symbol. In such cases, multiplication may be used in the symbol correlation responsive to the soft decision. Moreover, an XOR operation or multiplication may be used in the symbol correlation responsive to the hard decision.

In some implementations, in computing the hypothesis correlation, process 900 may involve processor 812 performing certain operations. For instance, process 900 may involve processor 812 collecting a plurality of received symbols. Additionally, process 900 may involve processor 812 computing hypothesis correlations of the plurality of received symbols.

Alternatively, or additionally, in computing the hypothesis correlation, process 900 may involve processor 812 performing certain operations. For instance, process 900 may involve processor 812 collecting a plurality of received symbols in a sliding window buffer. Moreover, process 900 may involve processor 812 updating a corresponding part of all hypothesis correlations when receiving one of the plurality of received symbols.

Alternatively, or additionally, in computing the hypothesis correlation, process 900 may involve processor 812 performing certain operations. For instance, process 900 may involve processor 812 performing a bit synchronization detection to reduce a number of hypotheses used in a subframe synchronization detection. Furthermore, process 900 may involve processor 812 performing the subframe synchronization detection.

In some implementations, in detecting the data symbols, process 900 may involve processor 812 detecting the data symbols using a signal tracking and detection module.

In some implementations, in computing the hypothesis correlation, process 900 may involve processor 812 performing the hypothesis correlation using an in-phase component of an estimated data symbol responsive to a PLL being locked.

Alternatively, or additionally, in computing the hypothesis correlation, process 900 may involve processor 812 performing the hypothesis correlation using an in-phase component and a quadrature component of an estimated data symbol responsive to a FLL being locked.

Alternatively, or additionally, in computing the hypothesis correlation, process 900 may involve processor 812 performing the hypothesis correlation using an in-phase component and a quadrature component of an estimated data symbol responsive to an occurrence of a frequency error in acquisition.

In some implementations, in computing the hypothesis correlation, process 900 may involve processor 812 performing certain operations. For instance, process 900 may involve processor 812 computing all possible bit correlations in a subframe and sharing the bit correlations to all hypotheses. Additionally, process 900 may involve processor 812 computing the hypothesis correlation using the shared bit correlations.

Alternatively, or additionally, in computing the hypothesis correlation, process 900 may involve processor 812 performing additional operations. For instance, process 900 may involve processor 812 computing sums of selected bit correlations and sharing the selected bit correlations to all hypotheses. Moreover, process 900 may involve processor 812 computing hypothesis correlations using a plurality of the shared bit correlation sums and bit correlations.

In some implementations, in computing the hypothesis correlations using the shared bit correlations, process 900 may involve processor 812 performing certain operations. For instance, process 900 may involve processor 812 performing a bit synchronization detection to reduce a number of hypotheses used in a subframe synchronization detection. Furthermore, process 900 may involve processor 812 performing the shared bit correlations required for the reduced number of hypotheses.

In some implementations, in detecting the data symbols using the signal tracking and detection module, process 900 may involve processor 812 outputting a lock indicator from the signal tracking and detection module. Additionally, process 900 may involve processor 812 choosing, by using the lock indicator, either or both of an in-phase component and a quadrature component of the signal tracking and detection module to perform the hypothesis correlation.

In some implementations, in computing the hypothesis correlation, process 900 may further involve processor 812 using an absolute value of the subframe sync correlation and absolute values of bit sync correlations responsive to a phase ambiguity in the signal tracking and detection module.

Alternatively, or additionally, in computing the hypothesis correlation, process 900 may involve processor 812 performing certain operations. For instance, process 900 may involve processor 812 performing the hypothesis correlation using a real data, a complex data, or a differential detection data from a tracking and detection module. Furthermore, process 900 may involve processor 812 synchronizing either or both of the data subframe and the bit timing using the correlations.

In some implementations, in computing the Sync Word Correlation, process 900 may involve processor 812 matching a predefined sequence of symbols in the signal specification.

In some implementations, in computing the Joint Correlation, process 900 may involve processor 812 computing the Bit Correlation based on the signal format definition. For example, one bit comprises two symbols encoded by a known sequence (meander sequence) in GLONASS.

In some implementations, responsive to a data bit being known, in computing the Joint Correlation, process 900 may further involve processor 812 computing the Bit Correlation or/and Sync Word Correlation using the known data bit, and wherein the known bit is equivalent to additional two Sync Word symbols.

In some implementations, responsive to an occurrence of a residual carrier frequency and phase error, in computing Joint Correlation, process 900 may involve processor 812 computing the correlation using an in-phase component, a quadrature component, or both, of the received symbols.

In some implementations, in computing Join Correlation, process 900 may involve processor 812 performing correlation of a soft decision or a hard decision detected symbols with defined symbols (e.g., known Sync Word). In such cases, multiplication may be used in the correlation responsive to the soft decision. Moreover, an XOR operation or multiplication may be used in the correlation responsive to the soft decision.

In some implementations, in computing the Joint Correlation, process 900 may involve processor 812 performing the correlations by: (a) computing all the hypotheses' Joint Correlations in one shot after collecting the plurality of received symbols; or (b) computing the Joint Correlation with a sliding window of the plurality of received symbols and updating a corresponding part of all the hypothesis correlations when receiving one of the plurality of received symbols.

In some implementations, in performing the Joint Correlation, process 900 may further involve processor 812 performing: (i) performing a bit synchronization detection to reduce the number of subframe hypotheses used in the subframe synchronization detection; and (ii) performing a subframe synchronization detection.

In some implementations, in performing the Joint Correlation, process 900 may further involve processor 812 performing the Sync Word Correlation and Bit Correlation using data symbol from a tracking loop and data detection with data symbol processed by some mathematical function. For example, the defined operators, *Q*1(*I + j · Q*) and *abs*(*I + j* · *Q*).

In some implementations, in performing the Joint Correlation using the estimated data symbol, process 900 may involve processor 812 using an in-phase component of the estimated data symbol responsive to a PLL of the carrier tracking loop and symbol detection function block being locked. Alternatively, in performing the Joint Correlation using the estimated data symbol, process 900 may involve processor 812 using an in-phase component and a quadrature component of the estimated data symbol responsive to an FLL of the carrier tracking loop and symbol detection function block being locked. Alternatively, in performing the Joint Correlation using the estimated data symbol, process 900 may involve processor 812 using an in-phase component and a quadrature component of the estimated data symbol responsive to an occurrence of a frequency error in acquisition.

In some implementations, in computing the Joint Correlation, process 900 may involve processor 812 performing a Joint Correlation by: (a) computing Bit Correlations of the plurality of received symbols and sharing these Bit Correlations among all hypotheses; (b) using aiding data bits to compute Sync Word Correlation with some of a plurality of received symbols for each hypothesis; (c) computing a hypothesis's Joint Correlation using the shared Bit Correlations and its Sync Word Correlation.

In some implementations, in computing the Joint Correlation, process 900 may involve processor 812 performing a Joint Correlation by: (a) computing Bit Correlations of the plurality of received symbols and Bit Correlation Sums and sharing these Bit Correlations and Sums among all hypotheses; (b) using aiding data bits to compute Sync Word Correlation with some of a plurality of received symbols for each hypothesis; (c) computing a hypothesis's Joint Correlation using its Sync Word Correlation and the shared Bit Correlation and Sum values. For example, the Joint Correlation can consist of a Bit Correlation Sum and a Simplified Correlation, which is computed from the Sync Word Correlation and a plurality of the shared Bit Correlations.

In some implementations, in performing the Joint Correlation, process 900 may further involve processor 812 computing Joint Correlation using absolute value of Sync Word Correlation and absolute value of the Bit Correlations responsive to a phase ambiguity of the carrier tracking loop and symbol detection function block.

In some implementations, in performing the Joint Correlation and synchronization detection, process 900 may involve processor 812: (a) using a real data correlation engine, a complex data correlation engine and a differential detection correlation engine of the Joint Correlation Engine to compute correlation values respectively; (b) detecting the subframe and/or bit synchronization by all the correlations from the engines.

In some implementations, in performing the Joint Correlation and synchronization detection, process 900 may involve processor 812: (a) using a lock detector from the carrier tracking loop to choose a real data correlation engine, a complex data correlation engine or/and a differential detection correlation engine of the Joint Correlation Engine to compute correlation values respectively; (b) detecting the subframe and/or bit synchronization by all the correlations from the engines.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
receiving, by a processor of a user equipment, a signal (910);
detecting, by the processor, data symbols of a data subframe in the signal (920);
computing, by the processor, a hypothesis correlation including subframe sync and bit sync correlations (930); and
synchronizing, by the processor, the data subframe and bit timing (940).

2. The method of claim 1, wherein the subframe sync correlation comprises a correlation of a sync word matched to a predefined sequence of symbols in a Global Navigation Satellite System, in the following also referred to as GNSS, signal specification.

3. The method of claim 2, wherein the predefined sequence of symbols comprises a Time Mark sequence in a Global Navigation Satellite System, in the following also referred to as GLONASS, signal specification.

4. The method of any one of claims 1 to 3, wherein the bit sync correlation comprises a correlation of a bit matched to a predefined sequence of symbols in a GNSS signal specification.

5. The method of claim 4, wherein the predefined sequence of symbols comprises a meander sequence in a GLONASS signal specification.

6. The method of any one of claims 1 to 5, wherein, responsive to a data bit being known, the computing of the bit sync correlation and/or of the subframe sync correlation further comprises computing a correlation matched to the data bit; and/or
wherein, responsive to a data bit being unknown, the computing of the bit sync correlation further comprises computing the bit correlation using an estimated data bit.

7. The method of any one of claims 1 to 6, wherein, responsive to an occurrence of either or both of a residual carrier frequency and phase error, the computing of the hypothesis correlation comprises computing a symbol correlation using an in-phase component, a quadrature component, or both, of the data symbols.

8. The method of any one of claims 1 to 7, wherein the computing of the hypothesis correlation comprises performing a symbol correlation using a soft decision or a hard decision of the data symbol, wherein multiplication is used in the symbol correlation responsive to the soft decision, and wherein an XOR operation or multiplication is used in the symbol correlation responsive to the hard decision.

9. The method of any one of claims 1 to 8, wherein the computing of the hypothesis correlation comprises:
(a) collecting a plurality of received symbols, and
computing hypothesis correlations of the plurality of received symbols; and/or
(b) collecting a plurality of received symbols in a sliding window buffer, and
updating a corresponding part of all hypothesis correlations when receiving one of the plurality of received symbols; and/or
(c) performing a bit synchronization detection to reduce a number of hypotheses used in a subframe synchronization detection, and
performing the subframe synchronization detection.

10. The method of any one of claims 1 to 9, wherein the detecting of the data symbols comprises detecting the data symbols using a signal tracking and detection module.

11. The method of claim 10, wherein the computing of the hypothesis correlation comprises performing the hypothesis correlation using an in-phase component of an estimated data symbol responsive to a phase-locked loop, in the following also referred to as PLL, being locked; and/or
wherein the computing of the hypothesis correlation comprises performing the hypothesis correlation using an in-phase component and a quadrature component of an estimated data symbol responsive to a frequency-locked loop, in the following also referred to as FLL, being locked and/or responsive to an occurrence of a frequency error in acquisition.

12. The method of any one of claims 1 to 11, wherein the computing of the hypothesis correlation comprises:
computing all possible bit correlations in a subframe and sharing the bit correlations to all hypotheses; and
computing the hypothesis correlation using the shared bit correlations.

13. The method of claim 12, wherein the computing of the hypothesis correlation further comprises:
(a) computing sums of selected bit correlations and sharing the selected bit correlations to all hypotheses, and
computing hypothesis correlations using a plurality of the shared bit correlation sums and bit correlations; and/or
(b) performing a bit synchronization detection to reduce a number of hypotheses used in a subframe synchronization detection, and
performing the shared bit correlations required for the reduced number of hypotheses.

14. The method of claim 10 or 11 or any one of claims 12 and 13 being directly or indirectly dependent on claim 10, wherein the detecting the data symbols using the signal tracking and detection module comprises:
outputting a lock indicator from the signal tracking and detection module, and
choosing, by using the lock indicator, either or both of an in-phase component and a quadrature component of the signal tracking and detection module to perform the hypothesis correlation;
wherein the computing of the hypothesis correlation preferably further comprises using an absolute value of the subframe sync correlation and absolute values of bit sync correlations responsive to a phase ambiguity in the signal tracking and detection module.

15. The method of claim 10, 11 or 14, or any one of claims 12 and 13 being directly or indirectly dependent on claim 10, wherein the computing of the hypothesis correlation comprises:
performing the hypothesis correlation using a real data, a complex data, or a differential detection data from a tracking and detection module; and
synchronizing either or both of the data subframe and the bit timing using the correlations.
